# DEMANDE DE BREVET EUROPEEN

(11) **EP 0 849 141 A1**
(43) Date de publication de la demande: **24.06.1998**
(21) Numéro de dépôt: 97402993.6
(22) Date de dépôt: 10.12.1997
(51) Int. Cl.: B62D 1/19

(54) **Ensemble de colonne de direction rétractable notamment pour véhicule automobile**

(30) Priorité: 19.12.1996 FR 9615661
(71) Demandeur: ECIA - EQUIPEMENTS ET COMPOSANTS POUR L'INDUSTRIE AUTOMOBILE, F-25400 Audincourt (FR)
(72) Inventeur: Marche, Stéphane, 25150 Pont-De-Roide (FR); Passebecq, Ghislain, 25400 Exincourt (FR)
(74) Mandataire: Habasque, Etienne Joel Jean-François

(57) **Abrégé**

Cet ensemble comportant une structure de fixation (2) d'un corps de colonne (3) sur la structure du véhicule, dans lequel est disposé un arbre de direction (4), le corps étant relié à la structure de fixation (2) par des moyens de fixation à décrochement contrôlé au choc pour permettre une rétraction de l'ensemble, est caractérisé en ce que les moyens de fixation comprennent une pièce de montage (6) fixée sur le corps (3) et munie d'une lumière axiale (7) de réception d'un patin (8) de guidage relié à la structure de fixation (2) et comportant des moyens de guidage axial adaptés pour coopérer avec des moyens de guidage complémentaires des bords de la pièce de montage (6) délimitant la lumière axiale de celle-ci et des moyens de liaison à décrochement contrôlé interposés entre ce patin (8) et cette pièce de montage (6).

## Description

La présente invention concerne un ensemble de colonne de direction rétractable notamment pour véhicule automobile.

Plus particulièrement, l'invention concerne un ensemble de colonne de direction qui comporte une structure de fixation d'un corps de colonne sur le reste de la structure du véhicule et dans lequel est disposé un arbre de direction, dont une extrémité est adaptée pour recevoir un volant de direction et dont une autre extrémité est adaptée pour être reliée au reste du mécanisme de direction du véhicule.

On connaît déjà dans l'état de la technique, des ensembles de colonne de ce type dans lesquels le corps de colonne et l'arbre de direction comportent chacun deux portions télescopiques l'une dans l'autre, la portion de corps la plus proche du volant de direction étant reliée à la structure de fixation à travers des moyens de fixation à décrochement contrôlé au choc pour permettre une rétraction au choc de l'ensemble de colonne.

D'une façon générale, la portion correspondante du corps de colonne comporte par exemple une ferrure de fixation de celui-ci sur la structure du véhicule, l'accrochage de la ferrure sur la structure du véhicule étant assuré par exemple par l'intermédiaire de patins à décrochement contrôlé au choc pour permettre la rétraction au choc de l'ensemble de colonne.

Cette rétraction peut être provoquée lors d'un choc par exemple de la tête d'un utilisateur contre le volant de direction du véhicule.

On a également développé dans l'état de la technique, des ensembles de colonne dans lesquels la rétraction est provoquée par exemple par un vérin pyrotechnique déclenché lors du choc.

Enfin, dans d'autres ensembles, la rétraction est provoquée lors du déclenchement du module à sac gonflable intégré dans un coussin central du volant, ou par des efforts d'inertie liés au choc.

Cependant, tous les ensembles de colonne proposés dans l'état de la technique, présentent un certain nombre d'inconvénients, non seulement au niveau de la complexité de leur structure et donc de leur coût, mais également au niveau du guidage de l'ensemble lors de sa rétraction.

On conçoit que ceci peut présenter un certain nombre d'inconvénients, notamment pour la sécurité du conducteur du véhicule, si le sac ne se gonfle pas dans sa position optimale de sécurité.

Le but de l'invention est donc de résoudre ces problèmes.

A cet effet, l'invention a pour objet un ensemble de colonne de direction rétractable notamment pour véhicule automobile, du type comportant une structure de fixation d'un corps de colonne sur le reste de la structure du véhicule et dans lequel est disposé un arbre de direction, dont une extrémité est adaptée pour recevoir un volant de direction et dont une autre extrémité est adaptée pour être reliée au reste du mécanisme de direction du véhicule, le corps étant relié à la structure de fixation à travers des moyens de fixation à décrochement contrôlé au choc pour permettre une rétraction de l'ensemble de colonne, caractérisé en ce que les moyens de fixation à décrochement contrôlé comprennent une pièce de montage fixée sur le corps de colonne et munie d'une lumière axiale de réception d'un patin de guidage relié à la structure de fixation et comportant des moyens de guidage axial adaptés pour coopérer avec des moyens de guidage complémentaires des bords de la pièce de montage délimitant la lumière axiale de celle-ci et des moyens de liaison à décrochement contrôlé interposés entre ce patin et cette pièce de montage, pour permettre une rétraction axiale guidée au choc de l'ensemble de colonne.

L'invention sera mieux comprise à la lecture de la description qui va suivre, donnée uniquement à titre d'exemple et faite en se référant aux dessins annexés, sur lesquels :
- la Fig.1 représente une vue partielle en perspective d'un exemple de réalisation d'un ensemble de colonne de direction selon l'invention;
- la Fig.2 représente une vue en perspective éclatée de différents moyens entrant dans la constitution d'un tel ensemble;
- la Fig.3 représente une vue en coupe partielle d'un premier mode de réalisation d'une pièce de montage et d'un patin entrant dans la constitution d'un tel ensemble; et
- la Fig.4 représente une vue en coupe partielle d'un second mode de réalisation d'une telle pièce de montage et d'un tel patin.

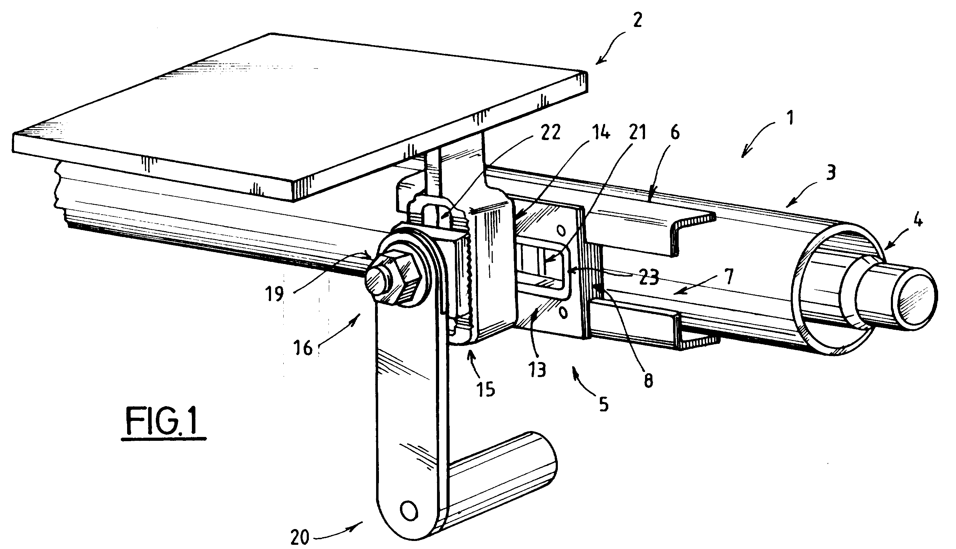

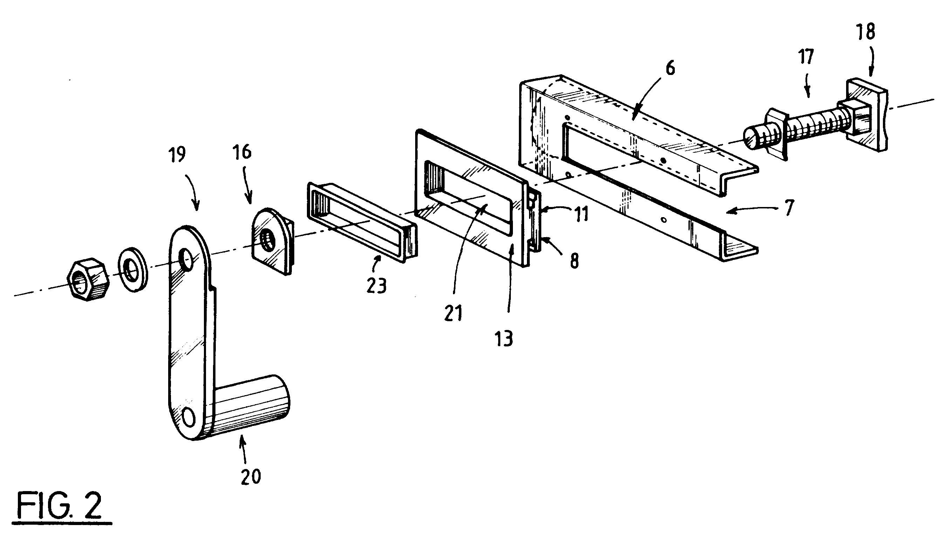

On reconnait en effet sur ces figures et en particulier sur les figures 1 et 2, un ensemble de colonne de direction rétractable notamment pour véhicule automobile, cet ensemble étant désigné par la référence générale 1 sur cette figure.

De façon classique, cet ensemble comporte une structure de fixation, désignée par la référence générale 2, d'un corps de colonne de direction désigné par la référence générale 3, sur le reste de la structure du véhicule.

Un arbre de direction désigné par la référence générale 4 est monté rotatif dans le corps de colonne 3 et une première extrémité de cet arbre est adaptée pour recevoir un volant de direction, tandis qu'une seconde extrémité de celui-ci est adaptée pour être reliée au reste du mécanisme de direction du véhicule.

De façon classique également, le corps 3 et par exemple l'extrémité de celui-ci la plus proche du volant de direction, est relié à la structure de fixation 2 à travers des moyens de fixation à décrochement contrôlé au choc désignés par la référence générale 5 sur cette figure 1, pour permettre une rétraction de l'ensemble de colonne.

Selon l'invention, ces moyens de fixation à décrochement contrôlé comprennent une pièce de montage désignée par la référence générale 6 sur ces figures, fixée sur l'extrémité correspondante du corps, par exemple par soudage ou autre.

Cette pièce peut également être venue de matière avec le corps.

Cette pièce de montage est munie d'une lumière axiale 7 de réception d'un patin de guidage désigné par la référence générale 8, relié à la structure de fixation 2 et comportant des moyens de guidage axial adaptés pour coopérer avec des moyens de guidage complémentaires des bords de la pièce de montage, délimitant la lumière axiale 7 de celle-ci.

De plus, des moyens de liaison à décrochement contrôlé sont interposés entre ce patin 8 et cette pièce de montage 6. Ceci permet une rétraction axiale guidée au choc de l'ensemble de colonne comme cela sera décrit plus en détail par la suite.

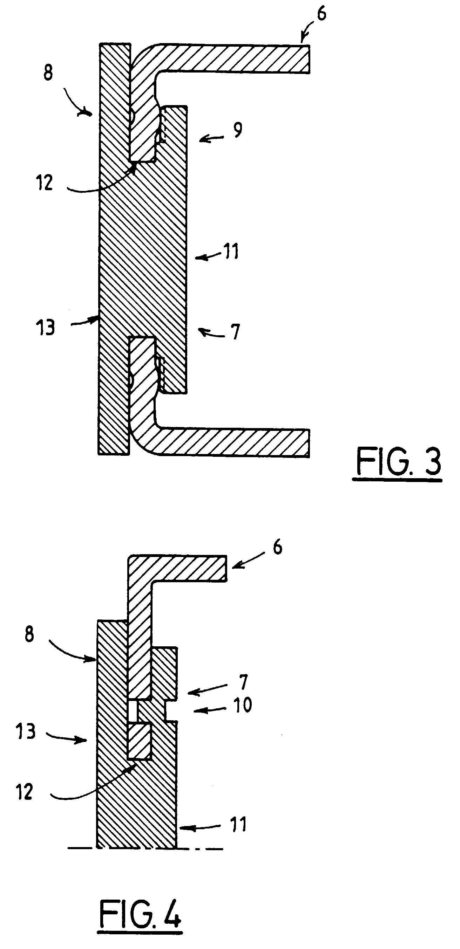

Comme cela est visible plus clairement sur les figures 3 et 4, sur lesquelles on reconnaît la pièce de montage 6 et le patin 8, les moyens de liaison à décrochement contrôlé interposés entre ce patin et cette pièce de montage, peuvent par exemple comporter des moyens à friction 9 tels que ceux représentés sur la figure 3 ou des moyens frangibles 10 tels que ceux représentés sur la figure 4.

En fait, ce patin de guidage 8 peut comporter une âme centrale désignée par la référence générale 11 sur ces figures, adaptée pour s'étendre dans la lumière axiale 7 de la pièce de montage 6 et dont les bords opposés comportent des glissières, telles que par exemple la glissière 12 représentée sur ces figures 3 et 4, formant les moyens de guidage du patin 8 adaptés pour coopérer avec les moyens de guidage complémentaires des bords de la pièce de montage 6.

Les moyens à friction 9 représentés sur la figure 3, peuvent par exemple comporter des bossages de la pièce de montage 6 adaptée pour coopérer avec des surfaces de freinage complémentaires du patin 8.

Les pions frangibles 10 représentés sur la figure 4, peuvent être venus de matière avec l'un ou insérés entre ces éléments.

Bien entendu, d'autres moyens de liaison à décrochement contrôlé au choc peuvent être envisagés, tels que par exemple à déformation, etc...

On notera que ces moyens de liaison à décrochement contrôlé interposés entre le patin et la pièce de montage, peuvent être régulièrement répartis entre ces éléments, et plus particulièrement entre les glissières de l'âme du patin et les surfaces en regard correspondantes de la pièce de montage.

Comme cela est visible plus clairement sur les figures 1 et 2, la pièce de montage 6 peut être prévue sur l'un des côtés de l'extrémité correspondante du corps de colonne 3, tandis que le patin 8 comporte sur son côté opposé au corps de colonne 3, une surface de contact 13 en appui sur une surface complémentaire 14 d'un organe de montage 15 de la structure de fixation 2.

Le patin 8 peut être relié à cet organe de montage 15 de cette structure de fixation 2, par l'intermédiaire de moyens 16 de réglage en position du corps de colonne par rapport à la structure de fixation.

Ces moyens de réglage sont représentés plus en détail sur la figure 2.

En fait, ces moyens de réglage désignés par la référence générale 16 comprennent par exemple un tirant désigné par la référence générale 17, adapté pour s'étendre à travers le patin de guidage 8 et l'organe de montage 15 de la structure de fixation.

Une première extrémité, par exemple 18, de ce tirant 17, est adaptée pour venir en appui sur l'âme centrale 11 du patin de guidage 8 et une seconde extrémité de celui-ci est associée à des moyens de blocage en position du corps de colonne, désignés par la référence générale 19, en appui sur l'organe de montage 15 de la structure de fixation.

Ces moyens de blocage sont déplaçables entre une position active de verrouillage et une position escamotée de déverrouillage du corps de colonne par rapport à la structure de fixation, ces moyens étant par exemple manoeuvrables par un utilisateur grâce à un levier 20.

Ces moyens de blocage peuvent comporter toutes structures appropriées, par exemple à came, à excentrique, à genouillère ou autre, permettant d'assurer un blocage du corps par rapport à la structure de fixation, et par exemple de la surface de contact 13 du patin 8 contre la surface au contact complémentaire 14 de l'organe de montage 15 de la structure de fixation 2.

En fait, le tirant 17 est monté déplaçable dans une lumière axiale 21 du patin 8 et dans une lumière 22 de l'organe de montage 15, s'étendant perpendiculairement à cette lumière axiale 21 du patin pour permettre un réglage en positions axiale et angulaire du corps de colonne.

Avantageusement également, des moyens de glissement peuvent être disposés dans chaque lumière.

Les moyens de glissement correspondants disposés dans la lumière 21 du patin 8 sont désignés par la référence 23 sur ces figures 1 et 2.

De plus, des moyens d'interdiction du déplacement de l'ensemble de colonne vers sa position initiale après rétraction peuvent être prévus.

Ces moyens d'interdiction peuvent par exemple comporter des moyens à crans interposés entre la pièce de montage 6 et le patin de guidage 8, par exemple au niveau des moyens de guidage complémentaires de ceux-ci, ces moyens autorisant la rétraction de l'ensemble de colonne dans une direction tout en empêchant le déplacement de celui-ci dans le sens opposé, pour éviter toute remontée de cet ensemble de colonne dans l'habitacle du véhicule.

On conçoit alors que lorsque les moyens de blocage 19 sont en position de verrouillage du corps, le tirant 17 de ceux-ci plaque le patin 8 contre l'organe de montage 15 de la structure de support 2 pour maintenir le corps de colonne en position.

Par contre, lorsque les moyens de blocage 19 sont en position escamotée de déverrouillage, l'utilisateur peut déplacer le corps de colonne axialement et angulairement pour le régler en position.

Lors d'un réglage en position axiale, le patin 8 relié au corps par la pièce de montage, se déplace par rapport au tirant 17 de ces moyens de blocage, la surface de contact 13 de ce patin 8 coulissant le long de la surface de contact complémentaire 14 de l'organe de montage 15 de la structure de fixation.

Lors d'un réglage en position angulaire, le corps, la pièce de montage, le patin et le tirant se déplacent par rapport à cet organe de montage 15, le tirant se déplaçant dans la lumière 22 de cet organe.

Lorsque les moyens de blocage sont en position de verrouillage et qu'il se produit un choc sur l'ensemble de colonne, les moyens de liaison à décrochement contrôlé du patin 8 et de la pièce de montage 6 se désengagent pour permettre une rétraction de l'ensemble de colonne, c'est-à-dire un déplacement axial de ce corps par rapport à la structure de fixation.

On notera que le déclenchement des moyens de liaison peut être provoqué par exemple par le déclenchement du module à sac gonflable, lors du déploiement de celui-ci ou encore par les forces d'inertie lors du choc.

La rétraction de l'ensemble de colonne est guidée grâce aux moyens de guidage interposés entre le patin et la pièce de montage, ce qui permet de maintenir l'ensemble de colonne en position optimale de sécurité pour le déploiement du sac.

Il va de soi bien entendu que différents modes de réalisation de l'ensemble qui vient d'être décrit peuvent être envisagés.

C'est ainsi par exemple que le corps et l'arbre peuvent comporter chacun deux portions télescopiques l'une dans l'autre, lors de la rétraction, ou non.

On notera également que dans l'ensemble selon l'invention, le fonctionnement des moyens de liaison à décrochement contrôlé au choc est totalement indépendant de degré de serrage par exemple de moyens de blocage en position du corps par rapport à la structure de fixation.

## Revendications

1. Ensemble de colonne de direction rétractable notamment pour véhicule automobile, du type comportant une structure de fixation (2) d'un corps de colonne (3) sur le reste de la structure du véhicule et dans lequel est disposé un arbre de direction (4), dont une extrémité est adaptée pour recevoir un volant de direction et dont une autre extrémité est adaptée pour être reliée au reste du mécanisme de direction du véhicule, le corps étant relié à la structure de fixation (2) à travers des moyens de fixation à décrochement contrôlé au choc pour permettre une rétraction de l'ensemble de colonne, caractérisé en ce que les moyens de fixation à décrochement contrôlé comprennent une pièce de montage (6) fixée sur le corps de colonne (3) et munie d'une lumière axiale (7) de réception d'un patin (8) de guidage relié à la structure de fixation (2) et comportant des moyens (12) de guidage axial adaptés pour coopérer avec des moyens de guidage complémentaires des bords de la pièce de montage (6) délimitant la lumière axiale de celle-ci et des moyens de liaison (9;10) à décrochement contrôlé interposés entre ce patin (8) et cette pièce de montage (6), pour permettre une rétraction axiale guidée au choc de l'ensemble de colonne.

2. Ensemble selon la revendication 1, caractérisé en ce que les moyens de liaison comprennent des moyens à friction (9).

3. Ensemble selon la revendication 1, caractérisé en ce que les moyens de liaison comprennent des moyens frangibles (10).

4. Ensemble selon l'une quelconque des revendications précédentes, caractérisé en ce que le patin de guidage (8) comporte une âme centrale (11) s'étendant dans la lumière (7) de la pièce de montage (6), et dont les bords opposés comportent des glissières (12) formant les moyens de guidage adaptés pour coopérer avec les moyens de guidage complémentaires des bords de cette pièce.

5. Ensemble selon la revendication 4, caractérisé en ce que les moyens de liaison à décrochement contrôlé sont prévus entre les glissières de l'âme (11) du patin (8) et les surfaces en regard de la pièce de montage (6).

6. Ensemble selon l'une quelconque des revendications précédentes, caractérisé en ce que la pièce de montage (6) est prévue sur l'un des côtés du corps de colonne (3), en ce que le patin comporte sur son côté opposé au corps, une surface de contact (13) en appui sur une surface complémentaire (14) d'un organe de montage (15) de la structure de fixation (2) et en ce que le patin (8) est relié à celle-ci par l'intermédiaire de moyens (16) de réglage en position du corps de colonne par rapport à la structure de fixation.

7. Ensemble selon la revendication 6, caractérisé en ce que les moyens de réglage (16) comprennent un tirant (17) s'étendant à travers le patin (8) et l'organe de montage (15), dont une première extrémité (18) est en appui sur l'âme centrale du patin (8) et dont une seconde extrémité est associée à des moyens de blocage (19) en position du corps de colonne, en appui sur l'organe de montage (15) et déplaçables entre une position active de verrouillage et une position escamotée de déverrouillage du corps de colonne.

8. Ensemble selon la revendication 7, caractérisé en ce que le tirant (17) s'étend dans une lumière axiale (21) du patin (8) et dans une lumière (22) de l'organe de montage (15), s'étendant perpendiculairement à cette lumière axiale (21) du patin, pour permettre un réglage en positions axiale et angulaire du corps de colonne.

9. Ensemble selon la revendication 8, caractérisé en ce que des moyens de glissement (23) sont disposés dans chaque lumière.

10. Ensemble selon l'une quelconque des revendications précédentes, caractérisé en ce qu'il comporte des moyens d'interdiction du déplacement de l'ensemble de colonne vers sa position initiale après rétraction.

11. Ensemble selon la revendication 10, caractérisé en ce que les moyens d'interdiction comprennent des moyens à crans, interposés entre la pièce de montage (6) et le patin de guidage (8).
